# EUROPEAN PATENT APPLICATION

(11) **EP 2 961 172 A1**
(43) Date of publication of application: **30.12.2015**
(21) Application number: 15173338.3
(22) Date of filing: 23.06.2015
(51) Int. Cl.: H04N 21/41, H04N 21/431, H04N 21/4722, H04N 21/4725, H04N 21/478

(54) **METHOD AND DEVICE FOR INFORMATION ACQUISITION**

(30) Priority: 26.06.2014 CN 201410300209
(71) Applicant: Xiaomi Inc., Beijing 100085 (CN)
(72) Inventor: LIU, Huadong, 100085 Beijing (CN); SUN, Wu, 100085 Beijing (CN); WANG, Aijun, 100085 Beijing (CN); GAO, Rongxin, 100085 Beijing (CN); JI, Hong, 100085 Beijing (CN)
(74) Representative: Sackin, Robert

(57) **Abstract**

The present disclosure generally relates to an information acquisition method and a device (110), pertaining to the field of Internet technology. The information acquisition method includes: acquiring associated information of at least one video element (21) in a video, each video element (21) being an image element, a sound element or a play clip in the video; and displaying the associated information at a specified moment; solving the problem of less efficient information acquisition, making it possible to display associated information of a video element in a terminal (110) at a specified moment, and improving the information acquisition efficiency.

## Description

### TECHNICAL FIELD

The present disclosure generally relates to the field of Internet technology, and more particularly, to an information acquisition method and a device thereof

### BACKGROUND

Video, such as teleplay (or TV drama), movie and the like, is an indispensable part for people's daily life. A video may comprise a lot of video elements, for example, a video may comprise different movie and television stars, scenic spots, articles, classic lines and interludes, etc.

When users are interested in a certain video element in a video, generally they need to manually acquire associated information of the video element. For example, when a user needs to view a blooper (or goof or an embarrassing error) in a video A, they need to locate and play the blooper by fast-forward, fast-backward buttons or adjusting a play progress bar in the process of playing the video A; for another example, when users need to know information relating to a racing car in video B, they need to manually input a key word relating to the racing car in a browser to conduct a search, and to find out the information relating to the racing car in a search result.

In the process of realizing the present disclosure, at least the following defects are found out in the above-mentioned manners: when users are interested in a certain video element in a video, generally they need to manually acquire information relating to the video element. In the whole acquisition process, users need to perform multiple operations, and thus the information acquisition efficiency is low.

### SUMMARY

In order to solve the problem of lower efficiency of information acquisition in related technologies, the embodiments of the present disclosure provide an information acquisition method and a device thereof, and the technical solution is as below:

According to the first aspect of the embodiments of the present disclosure, an information acquisition method is provided, for example, at a terminal or at a client, comprising:
acquiring associated information of at least one video element in a video, each video element being an image element, a sound element or a play clip in the video; and
displaying the associated information at a specified moment.

Preferably, the acquiring associated information of at least one video element in a video comprises:
downloading the associated information of at least one video element in a video from a server and saving the associated information at a scheduled moment; and
the scheduled moment comprising: a moment prior to playing the video, a moment during playing the video or an idle moment.

Preferably, the specified moment comprises:
a moment playing a tail leader of the video; or
a moment receiving a pause signal during playing the video.

Preferably, the acquiring associated information of at least one video element in a video comprises:
searching, from associated information of at least one video element in the video downloaded in advance, for associated information of a video element relating to the playback position in case of receiving users' information acquisition instruction when playing a certain playback position in the video.

Preferably, the acquiring associated information of at least one video element in a video comprises:
sending an information acquisition request to a server in case of receiving users' information acquisition instruction when playing a certain playback position in the video, the information acquisition request being configured to acquire associated information of a video element relating to the playback position; and
receiving such associated information of a video element as relating to the playback position and fed back by the server.

Preferably, the sending an information acquisition request to a server comprises:
acquiring a play message corresponding to the playback position, the play message comprising at least one of the following messages: image frame data relating to the playback position, audio frame data relating to the playback position, and play time point corresponding to play timeline of the playback position; and
sending the information acquisition request to the server, the information acquisition request carrying a video identification of the video and a play message corresponding to the playback position.

Preferably, the specified moment comprises:
a moment after receiving associated information of a video element relating to the playback position.

Preferably, the displaying the associated information at a specified moment comprises:
displaying directly the associated information by means of a prescriptive model if the terminal is a player device and a remote control unit corresponding to the player device has no information display ability;
if the terminal is a player device and a remote control unit corresponding to the player device has information display ability, displaying directly the associated information by means of a prescriptive model or sending the associated information to the remote control unit, the remote control unit being configured to display the associated information by means of a prescriptive model;
if the terminal is a medium source device connected to a player device and a remote control unit corresponding to the medium source device has no information display ability, sending the associated information to the player device; the player device being configured to display the associated information by means of a prescriptive model; and
if the terminal is a medium source device connected to a player device and a remote control unit corresponding to the medium source device has information display ability, sending the associated information to the player device or the remote control unit , the player device or the remote control unit being configured to display the associated information by means of a prescriptive model;
wherein, the prescriptive model comprising: at least one of a split screen mode, a list mode, a tagging mode, a scrolling mode, a screen popup mode or a window popup mode.

Preferably, the method also comprises:
when associated information of a video element displayed is triggered; jumping to a playback position corresponding to the video element in the video for playing or jumping to information content corresponding to an information link comprised in the associated information for displaying.

According to the second aspect of the embodiments of the present disclosure, an information acquisition method is provided for or at a server, comprising:
generating associated information of at least one video element in a video, each video element being an image element, a sound element or a play clip in the video; and
providing a terminal with associated information of at least one video element in the video, the terminal being configured to display the associated information at a specified moment.

Preferably, the providing a terminal with associated information of at least one video element in the video comprises:
providing the terminal with a downloads to associated information of at least one video element in the video at a scheduled moment;
the scheduled moment including: a moment prior to playing the video by the terminal, a moment during playing the video by the terminal or an idle moment of the terminal.

Preferably, the providing a terminal with associated information of at least one video element in the video comprises:
feeding, after receiving an information acquisition request sent by the terminal, back associated information of a video element relating to a playback position in the video to the terminal; wherein,
the information acquisition request being a request sent by the terminal after receiving users' information acquisition instruction during playing the video, and the playback position being a corresponding playback position when users' information acquisition instruction is received by the terminal during playing a video.

Preferably, the generating associated information of at least one video element in a video comprises:
identifying at least one video element in the video; and
acquiring associated information of each video element.

Preferably, the identifying at least one video element in the video comprises:
decoding the video and acquiring at least one frame of video data comprising image frame data or both image frame data and audio frame data;
identifying, concerning image frame data, image elements in the image frame data by means of image recognition technology; and
identifying, concerning audio frame data, sound elements in the audio frame data by means of speech recognition technology.

Preferably, the identifying at least one video element in the video comprises:
acquiring, after receiving an information acquisition request sent by the terminal, a play message corresponding to a playback position carried in the information acquisition request, the play message comprising at least one of the following messages: image frame data relating to the playback position, audio frame data relating to the playback position, and play time point corresponding to play timeline of the playback position; and
acquiring, according to the play message, video elements corresponding to the playback position in the video;
wherein, the information acquisition request being a request sent by the terminal after receiving users' information acquisition instruction during playing the video, and the playback position being a corresponding playback position when users' information acquisition instruction is received by the terminal during playing a video.

Preferably, the identifying at least one video element in the video comprises:
receiving at least one video element reported by other terminals with respect to the video, the video element being one labeled by users of the other terminals.

Preferably, the acquiring associated information of each video element comprises:
acquiring, concerning each video element, at least one information relating to the video element by means of information search technology;
sorting at least one information according to a preset condition, and extracting top n associated information as associated information of the video element, wherein n being a positive integer; and
the preset condition comprising: at least one of correlation with the video element, correlation with user location, correlation with users' history usage record, and ranking of manufacturers or suppliers of video elements.

Preferably, the acquiring associated information of each video element comprises:
receiving associated information reported by other terminals with respect to the video element, the other terminals being terminals used by other users, or, the other terminals being terminals used by manufacturers or suppliers of the video element.

According to the third aspect of the embodiments of the present disclosure, an information acquisition device is provided for a terminal or a client device for information acquisition, comprising:
an information acquisition module, configured to acquire associated information of at least one video element in a video, each video element being an image element, a sound element or a play clip in the video; and
an information display module, configured to display the associated information at a specified moment.

Preferably, the information acquisition module is configured to download the associated information of at least one video element in a video from a server and to save the associated information at a scheduled moment; and
the scheduled moment includes: a moment prior to playing the video, a moment during playing the video or an idle moment.

Preferably, the specified moment comprises:
a moment playing a tail leader of the video; or
a moment receiving a pause signal during playing the video.

Preferably, the information acquisition module is configured to search, from associated information of at least one video element in the video downloaded in advance, for associated information of a video element relating to the playback position in case of receiving users' information acquisition instruction when playing a certain playback position in the video.

Preferably, the information acquisition module comprises:
a request sending unit, configured to, when playing a certain playback position in the video, send an information acquisition request to a server in case of receiving users' information acquisition instruction, the information acquisition request being configured to acquire associated information of a video element relating to the playback position; and
an information receiving unit, configured to receive such associated information of a video element as relating to the playback position and fed back by the server.

Preferably, the request sending unit comprises:
an information acquisition subunit, configured to acquire a play message corresponding to the playback position, the play message comprising at least one of the following messages: image frame data relating to the playback position, audio frame data relating to the playback position, and play time point corresponding to play timeline of the playback position; and
a request sending subunit, configured to send the information acquisition request to the server, the information acquisition request carrying a video identification of the video and a play message corresponding to the playback position.

Preferably, the specified moment comprises:
a moment after receiving associated information of a video element relating to the playback position.

Preferably, the information display module is configured to:
if the terminal is a player device and a remote control unit corresponding to the player device has no information display ability, display directly the associated information by means of a prescriptive model;
if the terminal is a player device and a remote control unit corresponding to the player device has information display ability, display directly the associated information by means of a prescriptive model or send the associated information to the remote control unit configured to display the associated information by means of a prescriptive model;
if the terminal is a medium source device connected to a player device and a remote control unit corresponding to the medium source device has no information display ability, send the associated information to the player device is configured to display the associated information by means of a prescriptive model; and
if the terminal is a medium source device connected to a player device and a remote control unit corresponding to the medium source device has information display ability, send the associated information to the player device or the remote control unit, the player device or the remote control unit is configured to display the associated information by means of a prescriptive model;
wherein, the prescriptive model comprises: at least one of a split screen mode, a list mode, a tagging mode, a scrolling mode, a screen popup mode or a window popup mode.

Preferably, the device also comprises:
an information jump module, configured to, when associated information of a video element displayed is triggered, jump to a playback position corresponding to the video element in the video for playing or jump to information content corresponding to an information link comprised in the associated information for displaying.

According to the fourth aspect of the embodiments of the present disclosure, an information acquisition device is provided for a server or a server device, comprising:
an information generation module, configured to generate associated information of at least one video element in a video, each video element is an image element, a sound element or a play clip in the video; and
an information providing module, configured to provide a terminal with associated information of at least one video element in the video, the terminal is configured to display the associated information at a specified moment.

Preferably, the information providing module is configured to provide the terminal with a downloads to associated information of at least one video element in the video; and
the scheduled moment includes: a moment prior to playing the video by the terminal, a moment during playing the video by the terminal or an idle moment of the terminal.

Preferably, the information providing module is configured to feed, after receiving an information acquisition request sent by the terminal, back associated information of a video element relating to a playback position in the video to the terminal; wherein,
the information acquisition request is a request sent by the terminal after receiving users' information acquisition instruction during playing the video, and the playback position is a corresponding playback position when users' information acquisition instruction is received by the terminal during playing a video.

Preferably, the information providing module comprises:
an element identification unit, configured to identify at least one video element in the video; and
an information acquisition unit, configured to acquire associated information of each video element.

Preferably, the element identification unit comprises:
a video data acquisition subunit, configured to decode the video and acquire at least one frame of video data comprising image frame data or both image frame data and audio frame data;
a first identification subunit, configured to, concerning image frame data, identify image elements in the image frame data by means of image recognition technology; and
a second identification subunit, configured to, concerning audio frame data, identify sound elements in the audio frame data by means of speech recognition technology.

Preferably, the element identification unit comprises:
a play message acquisition subunit, configured to, after receiving an information acquisition request sent by the terminal, acquire a play message corresponding to a playback position carried in the information acquisition request; and
an element acquisition subunit, configured to, according to the play message, acquire a video element corresponding to the playback position in the video;
wherein, the information acquisition request is a request sent by the terminal after receiving users' information acquisition instruction during playing the video, and the playback position is a corresponding playback position when users' information acquisition instruction is received by the terminal during playing a video.

Preferably, the element identification unit is configured to receive at least one video element reported by other terminals with respect to the video, and the video element is one labeled by users of the other terminals.

Preferably, the information acquisition unit comprises:
an information acquisition subunit, configured to, concerning each video element, acquire at least one information relating to the video element by means of information search technology; and
an information sorting subunit, configured to sort at least one information according to a preset condition, and to extract top n associated information as associated information of the video element, wherein n being a positive integer;
the preset condition comprising: at least one of correlation with the video element, correlation with user location, correlation with users' history usage record, and ranking of manufacturers or suppliers of video elements.

Preferably, the information acquisition unit is configured to receive associated information reported by other terminals with respect to the video element, the other terminals are terminals used by other users, or, the other terminals are terminals used by manufacturers or suppliers of the video element.

According to the fifth aspect of the embodiments of the present disclosure, an information acquisition device is provided for a terminal, comprising:
a processor; and
a memory configured to store executable instructions from the processor;
wherein, the processor is configured to:
   acquire associated information of at least one video element in a video, each video element is an image element, a sound element or a play clip in the video; and
   display the associated information at a specified moment.

According to the sixth aspect of the embodiments of the present disclosure, an information acquisition device is provided for a server, comprising:
acquiring associated information of at least one video element in a video, each video element being an image element, a sound element or a play clip in the video; and
displaying the associated information at a specified moment.

The technical solution according to the embodiments of the present disclosure may have the following beneficial effects:

By means of acquiring associated information of a video element in a video and displaying associated information acquired at a specified moment, it is solved the problem of less efficient information acquisition, making it possible to display associated information of a video element by a terminal at a specified moment, and improving the information acquisition efficiency.

A computer program product may be provided which when executed on a processor of a client performs the method as described above or when executed on a processor of a server performs the method described above as applicable.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1A is a structure diagram showing an implementation environment according to an exemplary embodiment.
Fig. 1B is a structure diagram showing another implementation environment according to an exemplary embodiment.
Fig. 2 is a schematic diagram showing a video element and associated information according to an exemplary embodiment.
Fig. 3 is a flow chart showing an information acquisition method according to an exemplary embodiment.
Fig. 4 is a flow chart showing an information acquisition method according to another exemplary embodiment.
Fig. 5 is a flow chart showing an information acquisition method according to a further exemplary embodiment.
Fig. 6 is a flow chart showing providing associated information by a server according to a further exemplary embodiment.
Fig. 7 is another flow chart showing providing associated information by a server according to a further exemplary embodiment.
Fig. 8 is a flow chart showing an information acquisition method according to a further exemplary embodiment.
Fig. 9A is a schematic diagram showing displaying associated information by a terminal according to a further exemplary embodiment.
Fig. 9B is another schematic diagram showing displaying associated information by a terminal according to a further exemplary embodiment.
Fig. 9C is a further schematic diagram showing displaying associated information by a terminal according to a further exemplary embodiment.
Fig. 9D is a further schematic diagram showing displaying associated information by a terminal according to a further exemplary embodiment.
Fig. 9E is a further schematic diagram showing displaying associated information by a terminal according to a further exemplary embodiment.
Fig. 9F is a further schematic diagram showing displaying associated information by a terminal according to a further exemplary embodiment.
Fig. 9G is a further schematic diagram showing displaying associated information by a terminal according to a further exemplary embodiment.
Fig. 10 is a block diagram of an information acquisition device according to an exemplary embodiment.
Fig. 11 is a block diagram of an information acquisition device according to another exemplary embodiment.
Fig. 12 is a block diagram of an information acquisition device according to an exemplary embodiment.
Fig. 13A is a block diagram of an information acquisition device according to another exemplary embodiment.
Fig. 13B is a block diagram of an element identification unit according to an exemplary embodiment.
Fig. 13C is a block diagram of another element identification unit according to an exemplary embodiment.
Fig. 13D is a block diagram of an information acquisition unit according to an exemplary embodiment.
Fig. 14 is a block diagram of an information acquisition device according to an exemplary embodiment.
Fig. 15 is a block diagram of an information acquisition device according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

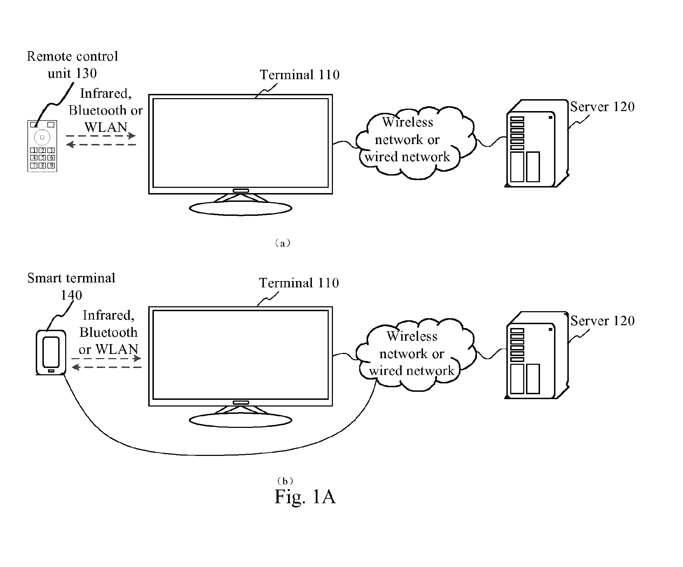

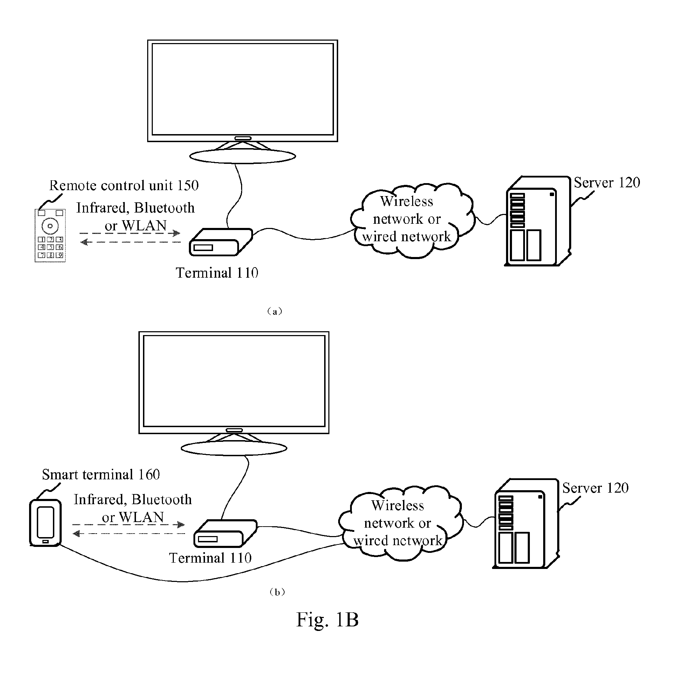

Fig. 1A and Fig. 1B show structure diagrams of implementation environment involved in the information acquisition methods according to embodiments of the present disclosure, and the implementation environment may include a terminal 110 and a server 120 connected to the terminal by wired or wireless network.

As shown in Fig. 1A, the terminal 110 may be a player device having play ability such as a television, a tablet computer, a desktop computer or a mobile phone and the like. The player device may, under the control of remote control equipment, directly acquire video resources from the server 120 and play the video resources acquired. Wherein, the remote control equipment may be connected to a television by infrared, Bluetooth or WLAN, and the remote control equipment may be either a remote control unit 130 as shown in Fig. 1A 's (a), or a smart terminal 140 as shown in Fig. 1A's (b).

As shown in Fig. 1B, the terminal 110 may be a medium source device connected to the player device. The medium source device may be a high-definition box, a Blu-ray player, a household NAS (Network Attached Storage) device and the like. Wherein, the player device may be a device having play ability such as a television, a tablet computer, a desktop computer or a mobile phone and the like. The player device can acquire, with the help of the medium source device connected with the player device, video resources from the server 120. The medium source device may acquire video resources from the server 120 and play the video resources acquired in the player device. Meanwhile, users may control the medium source device by means of the remote control equipment which is connected to a television by means of infrared, Bluetooth or WLAN, and the remote control equipment may be either a remote control unit 150 as shown in Fig. 1B's (a), or a smart terminal 160 as shown in Fig. 1B's (b).

In addition, the server 120 is connected with the terminal 110 by a wired network or a wireless network, and the server 120 may be a server, or a server cluster comprising a plurality of servers, or a cloud computing service center.

It should be explained that, in Fig. 1A and Fig. 1B, an implementation environment comprising foregoing devices are taken as an example; in some application scenarios for actual implementation, the implementation environment may also comprise a part of foregoing devices or other devices, to which the embodiment makes no restriction.

In addition, for the convenience of understanding, basic concepts involved in the embodiments are introduced herein.

A video element refers to an image element, a sound element or a play clip in a video. Wherein, the image element is an element in an image frame data, such as a figure (or person) or an object; the sound element is a sound, being an audio frame data or a plurality of consecutive audio frame data; the play clip is an image frame data corresponding to a play time point or a plurality of consecutive image frame data corresponding to a play time quantum (or a period of play time).

Associated information of a video element refers to information associated with the video element. For example:
when a video element is a star, associated information may be an individual resume of the star, a starred work list, the latest microblog news and news report and the like about the star.

When a video element is a piece of clothing, associated information may be a buylink (or purchase link, buying link) of the clothing in an E-business website, a shop address for selling the clothing, a face fabric introduction of the clothing, and a matching recommendation of the clothing, etc.

When a video element is food, associated information may be a buying link of the food in an E-business website, a shop address for selling the food in the local place of users, and a cooking method of the food, etc.

When a video element is a background music, associated information may be a MV (Music Video) corresponding to the background music, lyrics of the background music, a singer of the background music, and a creation background of the background music, etc.

When a video element is a scenic spot, associated information may be a brief introduction of the scenic spot, a business link for providing tourism service of the scenic spot, cate (or good food) provided in the scenic spot, and other scenic spots belonging to the same types as the scenic spot, etc.

When a video element is a play clip, associated information may be image frame data, audio frame data, or image elements in the combination of both image frame data and audio frame data, or combination of the image elements and sound elements in the play clip.

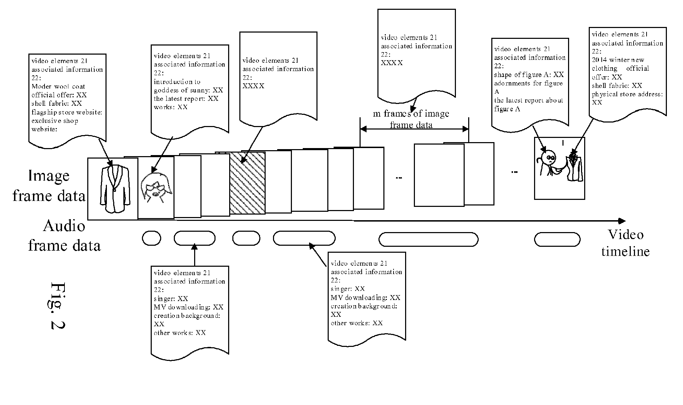

Fig. 2 shows video elements 21 in a video and associated information 22 of the video elements 21. It can be known from Fig. 2 that, video elements may be image elements in image frame data, or sound elements in audio frame data, or all elements (dash area as shown in Fig. 2) in image frame data, or m frames of image frame data or m frames of audio frame data, to which the embodiment makes no restriction. Wherein, m is an integer greater than or equal to 2.

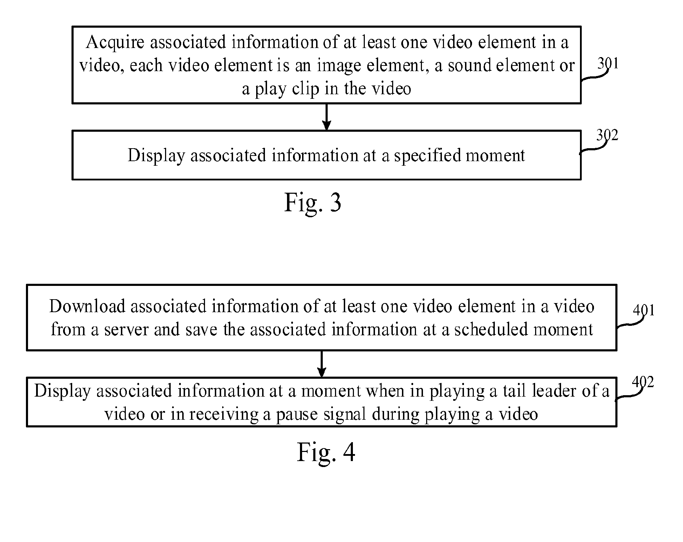

Fig. 3 is a flow chart showing an information acquisition method according to an exemplary embodiment which is illustrated by applying the information acquisition method to a terminal 110 as shown in Fig. 1A or Fig. 1B, and the information acquisition method may comprise following steps.

In Step 301, associated information of at least one video element in a video is acquired, each video element is an image element, a sound element or a play clip in the video; and
in Step 302, the associated information is displayed at a specified moment.

In conclusion, the information acquisition method according to the embodiment comprises acquiring associated information of a video element in a video and displaying the associated information acquired at a specified moment, solving the problem of less efficient information acquisition, making it possible to display associated information of a video element in a terminal at a specified moment, and improving the information acquisition efficiency.

The mode for a terminal to acquire associated information of at least one video element may comprise at least one of the following modes: downloading associated information of a video element from a server at a scheduled moment; in case of receiving users' information acquisition instruction, searching from such associated information of at least one video element as being downloaded in advance, for associated information of a video element relating to a video playback position when the information acquisition instruction is received; sending an information acquisition request to a server, and further receiving such associated information, which is fed back by the server, of a video element relating to a video playback position when information acquisition instruction is received. Reference will be made in detail to the foregoing three modes in different embodiments hereinafter.

Fig. 4 is a flow chart showing an information acquisition method according to an exemplary embodiment which is illustrated by applying the information acquisition method to a terminal 110 as shown in Fig. 1A or Fig. 1B and the terminal 110 is able to download associated information of a video element from a server at a scheduled moment. The information acquisition method may comprise following steps.

In Step 401, associated information of at least one video element in a video is downloaded by the terminal from a server and saved at a scheduled moment.

The terminal may request to download, from a server, associated information of at least one video element and save the associated information at a scheduled moment. In actual implementation, the terminal may send at a scheduled moment, an information acquisition request for acquiring associated information of at least one video element in the video, to a server. Wherein, the scheduled moment includes: a moment prior to playing a video, a moment during playing a video or an idle moment.

In Step 402, a terminal may display associated information at a moment when playing a tail leader of a video or receiving a pause signal during playing a video.

After acquiring associated information of at least one video element, a terminal may display the associated information at a moment when playing a tail leader of a video or receiving a pause signal during playing a video.

In case that a terminal displays associated information at a moment of playing tail leader of a video, after the terminal finishes playing the video, the terminal may display associated information of at least one video element in the video. In this way, users may acquire associated information of all video elements in the video, thus simplifying user operation.

In the process of playing a video, in case of receiving a pause signal and displaying associated information, a terminal may pause the video after receiving the pause signal, and display associated information of at least one video element in the video.

In actual implementation, a terminal may also display associated information at a certain play time point, to which the embodiment makes no restriction.

In conclusion, the information acquisition method according to the embodiment comprises acquiring associated information of a video element in a video and displaying the associated information acquired at a specified moment, solving the problem of less efficient information acquisition, making it possible to display associated information of a video element in a terminal at a specified moment, and improving the information acquisition efficiency.

By downloading associated information of at least one video element from a server at a scheduled moment, the embodiment reduces complexity in interaction between a terminal and a server when associated information is displayed in the terminal, and improves the efficiency of the terminal in displaying the associated information.

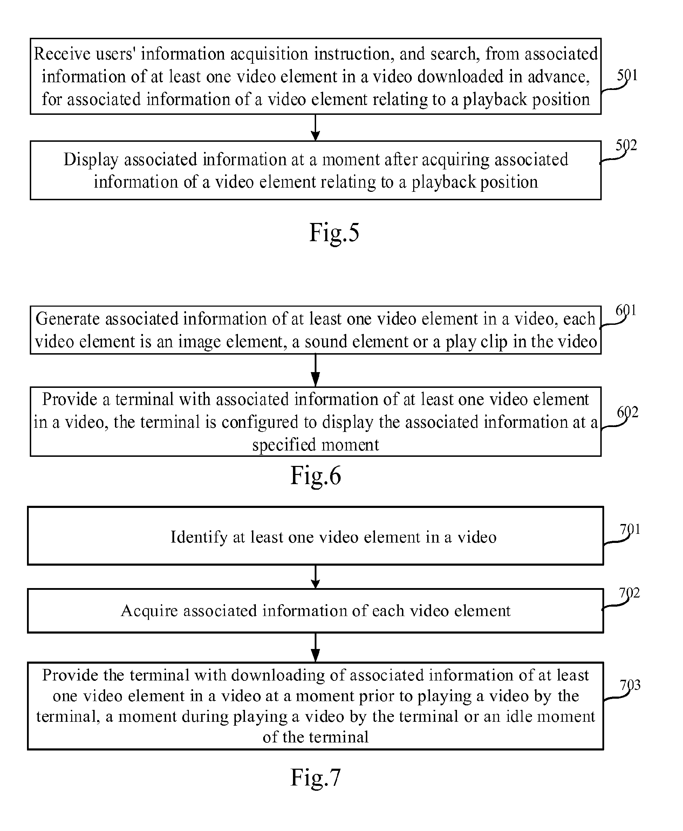

Fig. 5 is a flow chart showing an information acquisition method according to an exemplary embodiment which is illustrated by applying the information acquisition method to a terminal 110 as shown in Fig. 1A or Fig. 1B and the terminal 110 is able to, in case of receiving users' information acquisition instruction, search from associated information of at least one video element downloaded in advance, for associated information of a video element relating to a video playback position when the information acquisition instruction is received. The information acquisition method may comprise following steps.

In Step 501, a terminal receives users' information acquisition instruction, and searches, from associated information of at least one video element in a video downloaded in advance, for associated information of a video element relating to a playback position.

In the process of playing a video in a terminal, users may send an information acquisition instruction to the terminal by means of preset keys of the terminal or a remote control unit if they want to acquire associated information of a video element at the current playback position, correspondingly, users' information acquisition instruction is received by the terminal. Wherein, users may send out an information acquisition instruction by pressing preset keys of the remote control unit. Of course, users may also send out an information acquisition instruction by simultaneously pressing two keys such as '0' and 'Enter' keys, to which the embodiment makes no restriction.

In case of receiving information acquisition instruction, a terminal may search, from associated information of at least one video element in a video downloaded in advance, for associated information of a video element relating to a playback position. In actual implementation, a terminal may search, from associated information, for associated information corresponding to a playback position when an information acquisition instruction is received by the terminal.

In Step 502, the terminal may display associated information at a moment after receiving associated information of a video element relating to a playback position.

The terminal may display associated information after receiving associated information of a video element relating to a playback position. In actual implementation, users want to acquire associated information when they send out an information acquisition instruction. Therefore, a terminal may immediately display the associated information acquired, to which the embodiment makes no restriction.

In conclusion, the information acquisition method according to the embodiment comprises acquiring associated information of a video element in a video and displaying the associated information acquired at a specified moment, solving the problem of less efficient information acquisition, making it possible to display associated information of a video element in a terminal at a specified moment, and improving the information acquisition efficiency.

In the embodiment, when users' information acquisition instruction is received, associated information of a video element relating to a video playback position at the moment that users' information acquisition instruction is received is searched from associated information of at least one video downloaded in advance, thus ensuring the terminal to quickly acquire associated information requested by users, and further improving the efficiency of the terminal in displaying associated information and enhancing the information acquisition efficiency.

It should be explained that in the foregoing two embodiments, before the terminal acquires associated information of a video element, the server needs to generate associated information of at least one video element, and provides the terminal with the generated associated information of at least one video element. As shown in Fig. 6, the server may execute the following steps:

In Step 601, associated information of at least one video element in a video is generated, each video element being an image element, a sound element or a play clip in the video;.

The server stores videos for playing in a player device, and generates associated information of at least one video element in videos for executing follow-up steps. Wherein, each video element is an image element, a sound element or a play clip in the video.

In Step 602, associated information of at least one video element in a video is provided to a terminal so that the terminal displays the associated information at a specified moment.

Fig. 7 is a flow chart showing providing associated information by a server according to another exemplary embodiment. As shown in Fig. 7, the server may execute the following steps.

In Step 701, at least one video element in a video is identified.

In actual implementation, the Step may comprise following two possible implementations.

In a first possible implementation, the Step may comprise:
(1) It is decoded a video and acquiring at least one frame of video data.
   A server decodes a video, and further acquires at least one frame of video data in a video. Wherein, since in a video some playback positions may be configured with sound while other playback positions may be not configured with sound, the server may simultaneously decode and acquire both image frame data and audio frame data at the playback positions configured with sound, and may decode and acquire only image frame data at the playback positions not configured with sound.
(2) Concerning image frame data, it is identified image elements in the image frame data by means of image recognition technology.
   Concerning image frame data acquired by decoding, a server may identify image elements in the image frame data by means of image recognition technology. In actual implementation, the server may match the image frame data acquired by decoding with images in an image database. If elements matching with images in the image database exist in the image frame data, the server takes the matched image elements as image elements in the image frame data. Wherein, the image database is a preset database comprising images including target objects such as figures, sceneries, articles for daily use, clothing, labels, trademarks, brands and keywords, to which the embodiment makes no restriction.
   For example, if an image database has an image of'figure A' and an image of 2014 winter new clothing of XX brand that 'figure A' endorses, and an image frame data acquired by the server also includes an image of'figure A' and an image of a coat among 2014 winter new clothing of XX brand, the server may take the image of 'figure A' and the image of the coat as image elements in the image frame data.
(3) Concerning audio frame data, it is identified sound elements in the audio frame data by means of speech recognition (or voice recognition) technology.
   Concerning audio frame data, a terminal may identify sound elements in the audio frame data by means of speech recognition technology. In actual implementation, a server may match audio frame data with a songbook (or a database of words and music), thus acquiring sound elements in audio frame data. Moreover, in order to more accurately identify a sound element, the server may combine an audio frame data with a preset length of audio frame data before the audio frame data, or with a preset length of audio frame data after the audio frame data, or with a preset length of audio frame data before the audio frame data and a preset length of audio frame data after the audio frame data, thus acquiring a multi-frame audio frame data and matching it with a songbook, to which the embodiment makes no restriction. Wherein, the songbook includes a preset database comprising audio frequencies, to which the embodiment makes no restriction.

Concerning at least one frame of video data acquired by a server by decoding, the server may take each frame of video data as a unit, thus identifying image elements or sound elements in each frame of video data; of course, the server may take two or more frames of video data as a unit, for example, take video data between the tenth minute and the eleventh minute in a video as a play clip, further take image elements or sound elements identified and acquired in the video data in the play clip simultaneously as video elements, to which the embodiment makes no restriction.

It should be explained that concerning a part of video data acquired by a server by decoding, the server may not identify and acquire image elements or sound elements from video frame data, and may only identify and acquire image elements or sound elements from another part of video data, to which the embodiment makes no restriction.

In a second possible implementation, the step may include:

As users may label video elements in a video, the step in which a server identifies at least one video element in a video may comprise: directly receiving at least one video element reported by other terminals with respect to the video, and the video element is one labeled by users of other terminals.

In Step 702, associated information of each video element is acquired.

After acquiring at least one video element, a server may acquire associated information of each video element. Wherein, the mode in which a server acquires associated information of a video element may comprise the two following possible implementations:

In a first possible implementation, the Step may comprise:
(1) Concerning each video element, it is acquired at least one information of a video element by means of information search technology.
   Concerning each video element identified and acquired by a server, the server may acquire at least one information of a video element by means of information search technology. For example, when a video element acquired by a server is an image of'figure A', the server may search from a network server for information associated with the image of'figure A'.
(2) It is sorted at least one information according to a preset condition, and extracted top n associated information as associated information of a video element, wherein n being a positive integer.
   A server may sort at least one information acquired according to a preset condition. Wherein, the preset condition comprises: at least one of correlation with a video element, correlation with user location, correlation with users' history (or history of usage record), and ranking of manufacturers or suppliers of video elements.
   Wherein:
   Correlation with a video element refers to correlation between information searched and the video element. For example, if a video element is an image of a'figure A', and information searched respectively is 'figure A and figure B', 'the latest report about figure A', 'shape of figure A (or character A's shape)', 'adornments for figure A' and the like, the correlation between the information searched and the video element successively is, according to a sequence from high to low, 'shape of figure A', 'adornments for figure A', 'the latest report about figure A' and 'something about figure A and figure B'.

Correlation with user location refers to a distance between information searched and the user location. Wherein, the user location is a geographic location reported by a user to a sever when a user terminal requests to play a video in the server, for example, the geographic location reported by the user is No.5, Zhongshan Road, Wuxi City.

For example, if a video element is an image of 'a certain coat of XX brand', information searched is 'XX Exclusive Shop, No.8, XX Temple, Wuxi City', 'XX Outlet Shop, No. 7, Zhongshan Road, Wuxi City' and 'Shopping Plaza, No 10. Changjiang Road, Wuxi city', the correlation between the information searched and the user location successively is, according to a sequence from high to low, 'XX Outlet Shop, No. 7, Zhongshan Road, Wuxi City', 'XX Exclusive Shop, No.8, XX Temple, Wuxi City' and 'Shopping Plaza, No 10. Changjiang Road, Wuxi city'.

Correlation with users' history usage record refers to correlation between information searched and associated information triggered by and used in user history. For example, if users generally are concerned about clothing and food, and information searched by users is information relating to automobiles, scenic spots, food and clothing respectively, a server may determine that the correlation between the information searched and user historical usage records successively is, according to a sequence from high to low, clothing, food, scenic spots and automobiles.

Ranking of manufacturers or suppliers of video elements refers to a preset ranking of manufacturers or suppliers in a server, on the basis of which, the server may sort information searched.

After a server sorts information acquired, the server may extract top n information from information sorted as associated information of a video element. For example, the server selects top 10 information as associated information of a video element. Of course, in actual implementation, the server may also take all information sorted as associated information of a video element, to which the embodiment makes no restriction.

In a second possible implementation, the Step may comprise:
As user may report associated information for each video element, the server may receive associated information reported by other terminals with respect to the video element. Wherein, other terminals are terminals used by other users, or, other terminals are terminals used by manufacturers or suppliers of video elements. Associated information reported by other terminals may be information sorted according to a certain sort order, to which the embodiment makes no restriction.

It should be explained that, manufactures or providers of a video element may monopolize associated information of a video element in a certain play clip in a video, for example, from the tenth minute to the eleventh minute, a hero (or leading actor) in a video is selecting clothing for a news conference to be held in the next day, a manufacturer of 'a certain coat of XX brand' (a video element) may buy out the associated information of the video element from the tenth minute to the eleventh minute in the video. Under the circumstances, although a server may identify and acquire other video elements from video frame data from the tenth minute to the eleventh minute in the video, the server still sets 'a certain coat of XX brand' (information set by the manufacturer) as the associated information of the video element from the tenth minute to the eleventh minute in the video.

It should be further explained that, when video elements identified and acquired by a server are video elements corresponding to different locations of a video, after acquiring associated information of each video element, the server may determine a playback position corresponding to the associated information, and take the playback position determined as a piece of attribute information of associated information, to which the embodiment makes no restriction.

In Step 703, the server offers, at a moment prior to playing a video by the terminal, a moment during playing a video by the terminal or an idle moment of the terminal, the terminal with downloads to associated information of at least one video element in a video.

In actual implementation, the server may take the initiative to send associated information of at least one video element in a video to the terminal, or provide the terminal with downloads to associated information after receiving an information acquisition request sent by the terminal.

By taking the server taking the initiative to send associated information as an example, after generating associated information of at least one video element in a video, the server may directly send the associated information to the terminal, i.e., the server may provide the terminal with downloads to associated information at a moment before the terminal playing a video; or, the server may send the associated information to the terminal when the terminal is playing a video; or the server may send the associated information to the terminal at an idle moment of the terminal, for example, midnight '12:00', to which the embodiment makes no restriction.

In conclusion, the information acquisition method according to the embodiment comprises generating associated information of at least one video element and providing a terminal with associated information of at least one video element so as to display associated information at a specified moment after the associated information is acquired by the terminal, solving the problem of less efficient information acquisition, making it possible to display associated information of a video element in a terminal at a specified moment, and improving the information acquisition efficiency.

The foregoing embodiments take an example in which the server generates in advance associated information of at least one video element. And the server generating associated information of a video element in real time according to an information acquisition request of the terminal will be illustrated in the following embodiments.

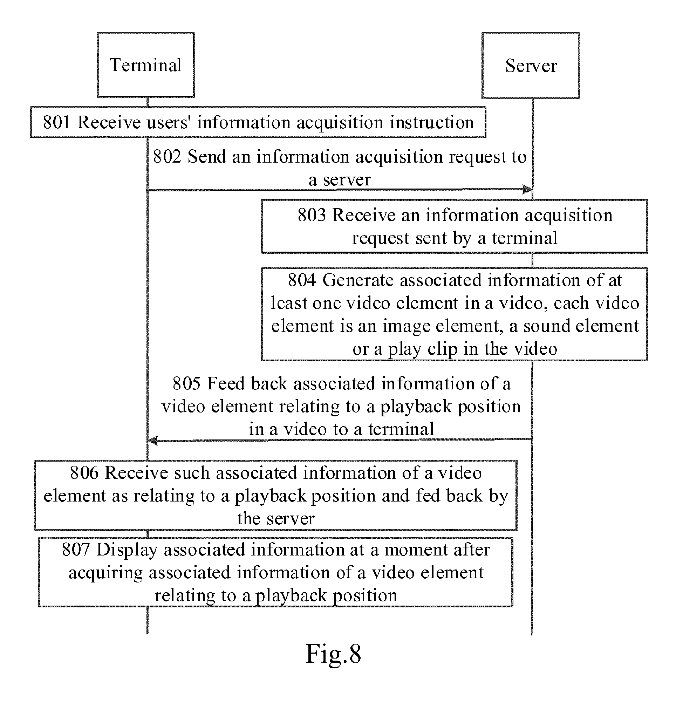

Fig. 8 is a flow chart showing an information acquisition method according to an exemplary embodiment which is illustrated by applying the information acquisition method to a terminal 110 as shown in Fig. 1A or Fig. 1B and the terminal 110 is able to, upon receiving users' information acquisition instruction, send an information acquisition request to a server, the server feeds back associated information generated to the terminal, and the terminal receives such associated information of a video element relating to a playback position when the information acquisition instruction is received. The information acquisition method may comprise following steps.

In Step 801, a terminal receives users' information acquisition instruction.

In the process of playing a video by a terminal, users may send an information acquisition instruction to the terminal by means of preset keys of the terminal or preset keys of a remote control unit if they want to acquire associated information of a video element at the current playback position, correspondingly, users' information acquisition instruction is received by the terminal. Wherein, users may send out an information acquisition instruction by pressing preset keys of a remote control unit, of course, users may also send out an information acquisition instruction by simultaneously pressing two keys such as '0' and 'Enter' keys, to which the embodiment makes no restriction.

In Step 802, a terminal sends an information acquisition request to a server.

A terminal sends an information acquisition request to a server once it receives an information acquisition instruction. Wherein, the information acquisition request is configured to acquire associated information of a video element relating to a playback position.

In actual implementation, the Step in which a terminal sends an information acquisition request to a server may comprise:

Firstly, it is acquired a play message corresponding to a playback position.

A terminal may acquire a play message corresponding to a video playback position when an information acquisition instruction is received. Wherein, the play message comprises at least one of the following messages: image frame data relating to a playback position, audio frame data relating to a playback position, and play time point corresponding to play timeline of a playback position. For example, the play message corresponding to a playback position acquired by a terminal is 15:14.

Secondly, it is sent an information acquisition request to a server, the information acquisition request carrying a video identification of the video and a play message corresponding to a playback position.

After acquiring a play message corresponding to a playback position, the terminal may send the server an information acquisition request carrying a video identification of a video and a play message corresponding to a playback position. Wherein, the video identification may be the name of a video or ID (identification) assigned by the server to the video, to which the embodiment makes no restriction.

In Step 803, a server receives an information acquisition request sent by a terminal.

In Step 804, a server generates associated information of at least one video element relating to a playback position in a video, each video element being an image element, a sound element or a play clip in the video.

After receiving the information acquisition request, the server reads the video identification in the information acquisition request and the play message corresponding to a playback position, thus generates associated information of at least one video element relating to the playback position corresponding to the play message in the video indicated in the video identification. Wherein, the Step in which a server generates associated information of at least one video element relating to a playback position in a video may comprise:

Firstly, it is identified at least one video element in the video.

In actual implementation, the Step may comprise:
(1) after receiving an information acquisition request sent by a terminal, a server acquires a play message corresponding to a playback position carried in the information acquisition request, the play message comprising at least one of the following messages: image frame data relating to the playback position, audio frame data relating to the playback position, and play time point corresponding to play timeline of the playback position; and
(2) it is acquired, according to the play message, video elements corresponding to the playback position in the video.

Wherein, the information acquisition request is a request sent by the terminal after receiving users' information acquisition instruction during playing a video, and the playback position is a corresponding playback position when users' information acquisition instruction is received by the terminal during playing the video.

After acquiring a play message in the information acquisition request, a server may acquire, according to the play message, a video element corresponding to a playback position in a video. In actual implementation, the Step in which a server acquires a video element corresponding to a playback position in a video comprises:
(a) it is decoded a video and acquired at least one frame of video data.
   A server decodes a video, and further acquires at least one frame of video data in a video. Wherein, in a video, some playback positions are configured with sound while other playback positions are not configured with sound. The server may simultaneously decode and acquire image frame data and audio frame data at playback positions configured with sound, and decode and acquire only image frame data at playback positions not configured with sound.
(b) Concerning image frame data, it is identified image elements in the image frame data by means of image recognition technology.
   Concerning image frame data acquired by decoding, a terminal may identify image elements in the image frame data by means of image recognition technology. In actual implementation, the server may match the image frame data acquired by decoding with images in an image database. If elements matching with images in the image database exist in the image frame data, the server takes the matched image elements as image elements in the image frame data. Wherein, the image database is a preset database comprising images including target objects such as figures, sceneries, articles for daily use, trappings, labels, trademarks, brands and keywords, to which the embodiment makes no restriction.
(c) Concerning audio frame data, it is identified sound elements in the audio frame data by means of speech recognition technology.
   Concerning audio frame data, a terminal may identify sound elements in the audio frame data by means of speech recognition technology. In actual implementation, a server may match audio frame data with a songbook, thus acquiring sound elements in audio frame data. Moreover, in order to more accurately identify a sound element, the server may combine an audio frame data with a preset length of audio frame data before the audio frame data, or with a preset length of audio frame data after the audio frame data, or with a preset length of audio frame data before the audio frame data and a preset length of audio frame data after the audio frame data, thus acquiring a multi-frame audio frame data and matching it with a songbook, to which the embodiment makes no restriction. Wherein, the songbook includes a preset database comprising audio frequencies, to which the embodiment makes no restriction.

It should be explained that it is similar to the identification mode of a video element in Step 701 in the foregoing embodiments, with detailed technical details referred to in the foregoing embodiments, not to be repeated any more herein.

Secondly, it is acquired associated information of each video element.

After acquiring at least one video element, a server may acquire associated information of each video element. Wherein, the mode in which a server acquires associated information of a video element may comprise the two following possible implementations:

In a first possible implementation, the Step may comprise:
(1) concerning each video element, it is acquired at least one information relating to a video element by means of information search technology.
   Concerning each video element identified and acquired by a server, the server may acquire at least one information relating to a video element by means of information search technology.
(2) It is sorted at least one information according to a preset condition, and extracted top n associated information as associated information of a video element, wherein n being a positive integer.
   A server may sort at least one information acquired according to a preset condition. Wherein, the preset condition comprises: at least one of correlation with a video element, correlation with user location, correlation with users' history usage record, and ranking of manufacturers or suppliers of video elements.

In a second possible implementation, the Step may comprise:

As user may report associated information for each video element, the server may receive associated information reported by other terminals with respect to the video element. Wherein, other terminals are terminals used by other users, or, other terminals are terminals used by manufacturers or suppliers of video elements. Associated information reported by other terminals may be information sorted according to a certain sort order, to which the embodiment makes no restriction.

In Step 805, a server feeds back associated information of a video element relating to a playback position in a video to a terminal.

After generating associated information of a video element relating to a playback position in a video, a server feeds back associated information of a video element relating to a playback position in a video to a terminal.

In Step 806, a terminal receives such associated information of a video element as relating to a playback position and fed back by the server.

In Step 807, a terminal may display associated information at a moment after receiving associated information of a video element relating to a playback position.

In actual implementation, users want to acquire associated information of a video element of the current playback position when they send out an information acquisition instruction. Therefore, the terminal may immediately display the associated information relating to the playback position once it is acquired.

In conclusion, the information acquisition method according to the embodiment comprises acquiring associated information of a video element in a video and displaying the associated information acquired at a specified moment, solving the problem of less efficient information acquisition, making it possible to display associated information of a video element in a terminal at a specified moment, and improving the information acquisition efficiency.

The embodiment comprise: when receiving users' information acquisition instruction, generating an information acquisition request carrying positional information corresponding to a video playback position when an information acquisition instruction is received, sending the information acquisition request to a server, and further acquiring from the server associated information of a video element corresponding to positional information, ensuring the terminal to display associated information required by users as long as they conduct one operation of an information acquisition instruction, thus improving the information acquisition efficiency and reducing user operation complexity.

It should be explained that in the foregoing embodiments, the mode of the terminal in displaying associated information may comprise any one of the following modes:

### Mode I:

the associated information is directly displayed by means of a prescriptive model if the terminal is a player device and a remote control unit corresponding to the player device has no information display ability.

Wherein, the prescriptive model comprises: at least one of a split screen mode, a list mode, a tagging mode, a scrolling mode, a screen popup mode and a window popup mode.

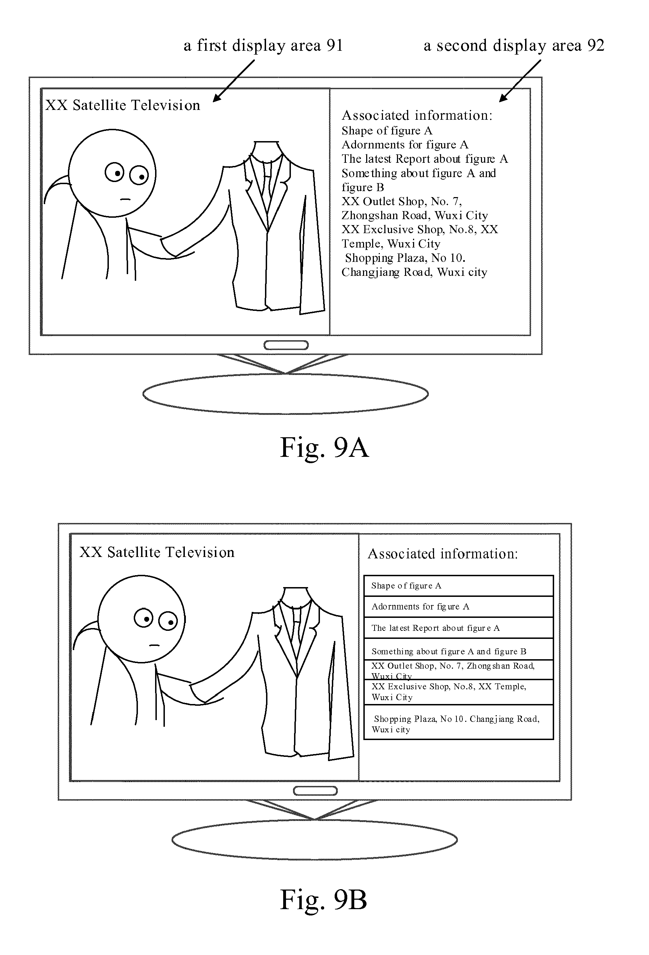

For example, please refer to Fig. 9A, an example is taken in which the terminal is a television and a prescriptive model is a split screen mode, a scheduled position in a video is played by the television. For example, the television continues playing a video in a first display area 91 in a screen, and displays associated information in a second display area 92.

Similarly, please refer to Fig. 9B, the television may also display associated information by using a list mode. In this way, after the terminal displays associated information, users may rapidly seek out information needed from associated information displayed in the terminal, thus improving the information acquisition efficiency and simplifying user operation.

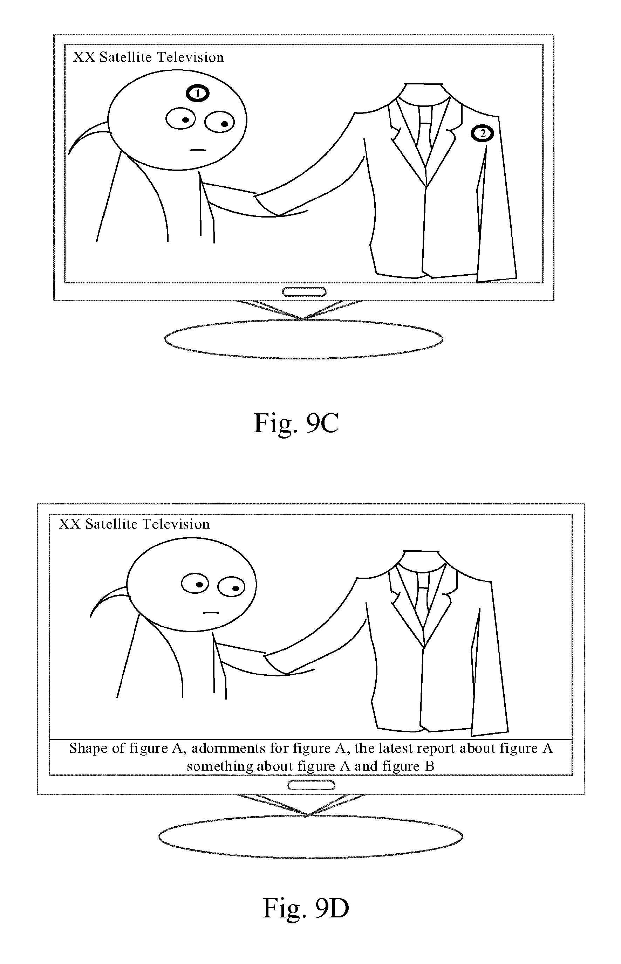

Please refer to Fig. 9C, the television may also display associated information by using a tagging mode. Wherein, each tag is corresponding to video element, users may trigger a corresponding tag if they want to view associated information of a certain video element, and further view associated information corresponding to the tag. Wherein, a terminal interface may display a positioning cursor which is corresponding to a first tag by default, and users may switch positions of the positioning cursor in tags by means of Page Up and Page Down keys of a remote control unit. When the positioning cursor is corresponding to a tag required for users, they may trigger the corresponding tag by pressing Enter key of the remote control unit. In actual implementation, the terminal may number tags before displaying tags. In this way, users may select '1' on the remote control unit and further trigger a first tag if they want to view associated information corresponding to the first tag, to which the embodiment makes no restriction.

Please refer to Fig. 9D, the terminal may also display associated information by using a scrolling mode. In this way, users may view corresponding associated information by viewing a scroll bar at the bottom of the screen while they are watching a video. It should be explained that Fig. 9D only takes an example in which the scroll bar is at the bottom of the screen. In actual implementation, the scroll bar may also be set at the left side, the right side or the top of the screen, to which the embodiment makes no restriction.

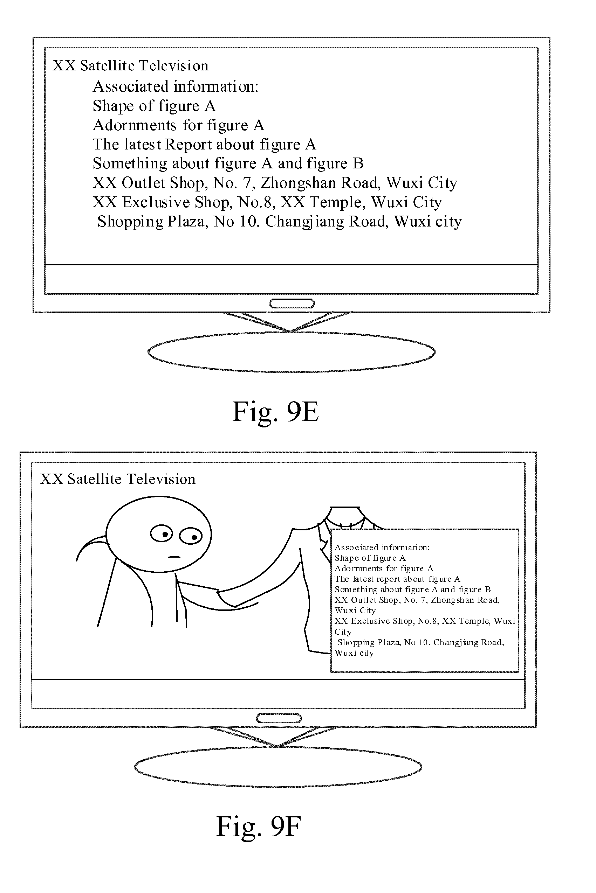

Please refer to Fig. 9E, the terminal may also display associated information by using a screen popup mode. In order to prevent users from missing highlights of a video at the next moment, the terminal may display associated information in a screen popup mode. The terminal may pause the video and continue playing the video when users quit from display of associated information, to which the embodiment makes no restriction.

Please refer to Fig. 9F, the terminal may also display associated information by using a window popup mode. In this way, users may view corresponding associated information in a popup window displayed in the terminal while they are watching a video.

### Mode II:

If the terminal is a player device and a remote control unit corresponding to the player device has information display ability, associated information is directly displayed by means of a prescriptive model or the associated information is sent to the remote control unit configured to display the associated information by means of a prescriptive model.

When the terminal is a player device, and a remote control unit corresponding to the player device is a device having information display ability, such as a mobile phone or a tablet computer and the like, the terminal may directly display the associated information by means of a prescriptive model, or send the associated information to the remote control unit configured to display the associated information by means of a prescriptive model, to which the embodiment makes no restriction.

### Mode III:

When the terminal is a medium source device connected to a player device and a remote control unit corresponding to the medium source device has no information display ability, the associated information is sent to the player device which can display the associated information by means of a prescriptive model.

When the terminal is a medium source device (such as 'XX box') connected to a player device and a remote control unit corresponding to the medium source device has no information display ability, the terminal may send the associated information to the player device, and then the player device may display the associated information by means of a prescriptive model.

### Mode IV:

When the terminal is a medium source device connected to a player device and a remote control unit corresponding to the medium source device has information display ability, the associated information is sent to the player device or the remote control unit configured to display the associated information by means of a prescriptive model.

Similarly, when a remote control unit corresponding to a medium source device has information display ability, the terminal may send the associated information to the player device or the remote control unit, and then the player device or the remote control unit may display the associated information by means of a prescriptive model, to which the embodiment makes no restriction.

The embodiment only takes an example in which associated information of at least one video element in a video is displayed at the same time. In actual implementation, if attribute information of associated information includes a playback position corresponding to the associated information, when a terminal is playing the playback position, the terminal may display associated information corresponding to the playback position, and further the terminal may respectively display associated information at two or more playback positions if there is associated information relating to two or more playback positions, to which the embodiment makes no restriction.

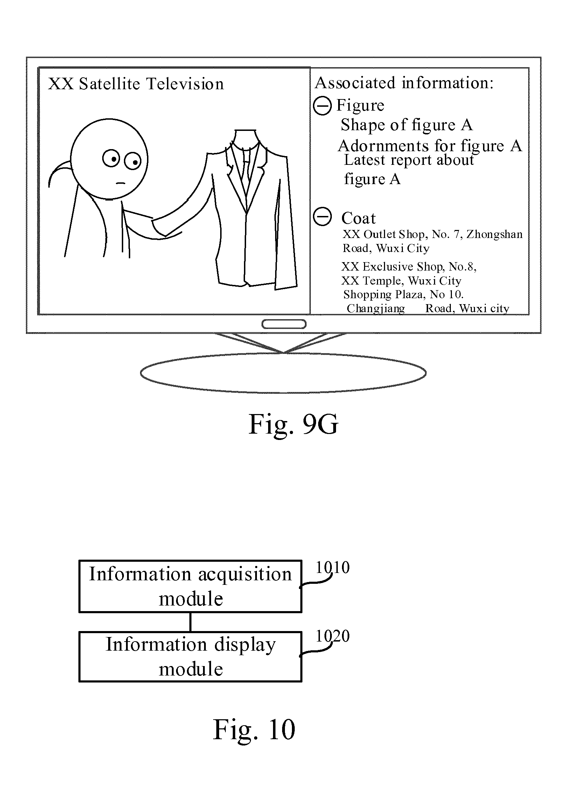

It should also be explained that when associated information is corresponding to two or more video elements, the terminal may display their associated information in a menu mode, for example, the display schematic diagram of the terminal is as shown in Fig.9G when the terminal displays in a split screen mode.

It shall be further explained that when associated information of a video element displayed on a terminal is triggered, the terminal may also execute the following steps:

jumping to a playback position corresponding to a video element in a video for playing; or jumping to information content corresponding to an information link comprised in the associated information for displaying.

After the terminal displays associated information, users may trigger to display the associated information according to their needs. For example, when associated information is displayed at a tail leader, users may trigger the associated information if they want to watch highlights (or wonderful clips) at a playback position corresponding to the associated information once more. After being triggered, the associated information jumps to the playback position corresponding to a video element in the video for playing. In this way, users need neither replay the video nor wait for the playback position corresponding to associated information to watch again the corresponding highlights, thus gaining convenience.

When associated information comprises an information link, users may trigger the associated information in order to view detailed information corresponding to the information link; after the associated information is triggered, the terminal jumps to information content corresponding to the information link comprised in the associated information for displaying. In this way, users may directly view detailed information corresponding to the associated information in an information display interface after the terminal is jumped, thus improving the information acquisition efficiency.

The Step in which a terminal jumps to information content corresponding to an information link comprised in the associated information for displaying comprises:
if the information link is an information introduction link, jumping to information introduction corresponding to the information introduction link for displaying;
if the information link is a shopping information link, jumping to shopping information corresponding to the shopping information link for displaying;
if the information link is a ticket information link, jumping to ticket information corresponding to the ticket information link for displaying;
if the information link is a traffic information link, jumping to traffic information corresponding to the traffic information link for displaying;
if the information link is a travel information link, jumping to travel information corresponding to the travel information link for displaying;
if the information link is a figure social information link, jumping to figure social information corresponding to the figure social information link for displaying; and
if the information link is a comment information link, jumping to comment information corresponding to the comment information link for displaying.

For example, if the server determines associated information 'the latest report of character A' of an image of 'character A' as a link, when users select the associated information displayed in the terminal, the terminal may jump to figure social information corresponding to the link for displaying; and if concerning an image of'a certain coat of XX brand', information searched by the server also comprises a shopping link provided in an E-business network, when users select the associated information, the terminal may jump to shopping information corresponding to the shopping link for displaying.

The following is the embodiment of the device in the present disclosure, which may be configured to execute the embodiment of the method in the present disclosure. Please refer to the embodiment of the method in the present disclosure with regard to undisclosed details about the embodiment of the device in the present disclosure.

Fig. 10 is a block diagram of an information acquisition device according to an exemplary embodiment; the information acquisition device can realize to become the terminal as shown in Fig. 1A or Fig. 1B in part or in whole by means of software or hardware or combination of both. The information acquisition device may comprise: an information acquisition module 1010 and an information display module 1020.

The information acquisition module 1010 is configured to acquire associated information of at least one video element in a video, and each video element is an image element, a sound element or a play clip in the video; and
the information display module 1020 is configured to display the associated information at a specified moment.

In conclusion, the information acquisition device according to the embodiment comprises acquiring associated information of a video element in a video and displaying the associated information acquired at a specified moment, solving the problem of less efficient information acquisition, making it possible to display associated information of a video element in a terminal at a specified moment, and improving the information acquisition efficiency.

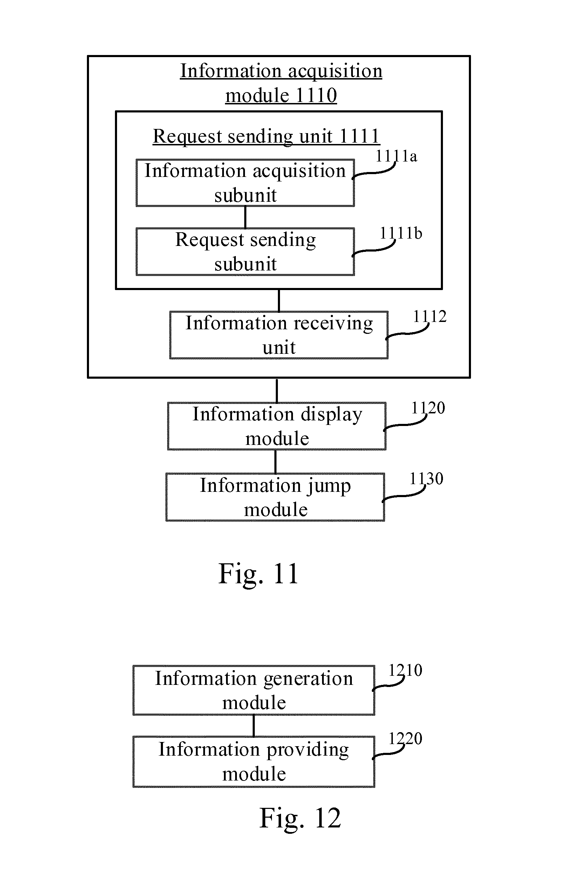

Fig. 11 is a block diagram of an information acquisition device according to an exemplary embodiment; the information acquisition device can realize to become the terminal as shown in Fig. 1A or Fig. 1B in part or in whole by means of software or hardware or combination of both. The information acquisition device may comprise: an information acquisition module 1110 and an information display module 1120.

The information acquisition module 1110 is configured to acquire associated information of at least one video element in a video, and each video element is an image element, a sound element or a play clip in the video.

The information display module 1120 is configured to display the associated information at a specified moment.

In the first possible implementation according to the embodiment, the information acquisition module 1010 is configured to download associated information of at least one video element in a video from a server and to save the associated information at a scheduled moment.

The scheduled moment includes: a moment prior to playing a video, a moment during playing a video or an idle moment.

In the second possible implementation according to the embodiment, the specified moment includes:
a moment playing a tail leader of a video; or
a moment receiving a pause signal during playing the video; or
a moment playing a scheduled position of a video.

In the third possible implementation according to the embodiment, the information acquisition module 1110 is configured to search, from associated information of at least one video element in a video downloaded in advance, for associated information of a video element relating to the playback position in case of receiving users' information acquisition instruction when playing a certain playback position in the video.

In the fourth possible implementation according to the embodiment, the information acquisition module 1110 comprises:
a request sending unit 1111, configured to send an information acquisition request to a server in case of receiving users' information acquisition instruction when playing a certain playback position in a video, the information acquisition request being configured to acquire associated information of a video element relating to the playback position; and
an information receiving unit 1112, configured to receive associated information of a video element which is relative to a playback position and fed back by a server.

In the fifth possible implementation according to the embodiment, the request sending unit 1111 comprises:
an information acquisition subunit 1111a, configured to acquire a play message corresponding to a playback position, the play message comprising at least one of following messages: image frame data relating to the playback position, audio frame data relating to the playback position, and play time point corresponding to play timeline of the playback position; and
a request sending subunit 1111b, configured to send an information acquisition request to a server, the information acquisition request carrying a video identification of a video and a play message corresponding to a playback position.

In the sixth possible implementation according to the embodiment, the specified moment includes:
a moment after acquiring associated information of a video element relating to a playback position.

In the seventh possible implementation according to the embodiment, the information display module 1120 is configured to:
if a terminal is a player device and a remote control unit corresponding to the player device has no information display ability, display associated information directly by means of a prescriptive model;
if a terminal is a player device and a remote control unit corresponding to the player device has information display ability, display associated information directly by means of a prescriptive model or send the associated information to the remote control unit configured to display the associated information by means of a prescriptive model.

When the terminal is a medium source device connected to a player device and a remote control unit corresponding to the medium source device has no information display ability, the associated information is sent to the player device configured to display the associated information by means of a prescriptive model.

When the terminal is a medium source device connected to a player device and a remote control unit corresponding to the medium source device has information display ability, the associated information is sent to the player device or the remote control unit configured to display the associated information by means of a prescriptive model.

Wherein, the prescriptive model comprises: at least one of a split screen mode, a list mode, a tagging mode, a scrolling mode, a screen popup mode and a window popup mode.

In the eighth possible implementation according to the embodiment, the device also comprises:
an information jump module 1130, configured to, when associated information of a video element displayed is triggered jump to a playback position corresponding to a video element in a video for playing or jump to information content corresponding to an information link comprised in the associated information for displaying.

In conclusion, the information acquisition device according to the embodiment comprises generating associated information of at least one video element and providing a terminal with associated information of at least one video element so as to display associated information at a specified moment after the associated information is acquired by the terminal, solving the problem of less efficient information acquisition, making it possible to display associated information of a video element by a terminal at a specified moment, and improving the information acquisition efficiency.

Fig. 12 is a block diagram of an information acquisition device according to an exemplary embodiment; the information acquisition device can realize to become the server as shown in Fig. 1A or Fig. 1B in part or in whole by means of software or hardware or combination of both. The information acquisition device may comprise: an information generation module 1210 and an information providing module 1220.

The information generation module 1210 is configured to generate associated information of at least one video element in a video, and each video element is an image element, a sound element or a play clip in the video.

The information providing module 1220 is configured to provide a terminal with associated information of at least one video element in a video, the terminal being configured to display the associated information at a specified moment.

In conclusion, the information acquisition device according to the embodiment comprises generating associated information of at least one video element and providing a terminal with associated information of at least one video element so as to display associated information at a specified moment after the associated information is acquired by the terminal, solving the problem of less efficient information acquisition, making it possible to display associated information of a video element by a terminal at a specified moment, and improving the information acquisition efficiency.

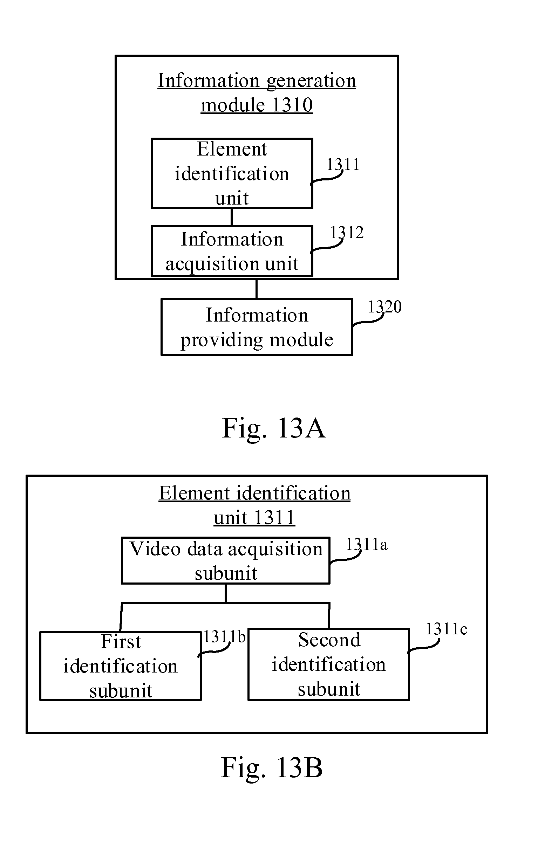

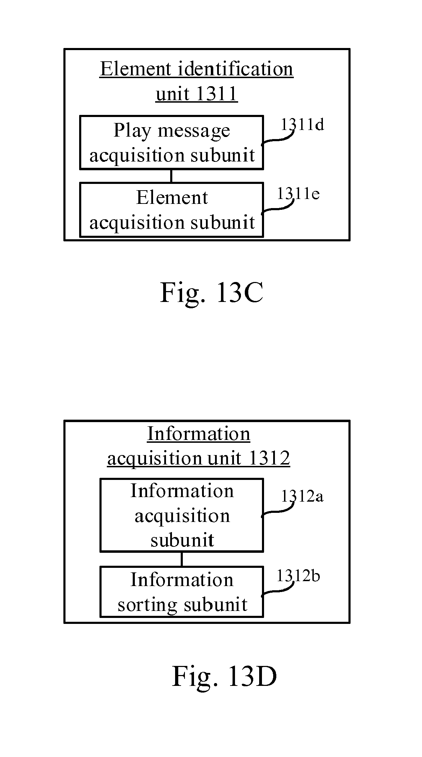

Fig. 13 is a block diagram of an information acquisition device according to an exemplary embodiment; the information acquisition device can realize to become the server as shown in Fig. 1A or Fig. 1B in part or in whole by means of software or hardware or combination of both. The information acquisition device may comprise: an information generation module 1310 and an information providing module 1320.

The information generation module 1310 is configured to generate associated information of at least one video element in a video, and each video element is an image element, a sound element or a play clip in the video.

The information providing module 1320 is configured to provide a terminal with associated information of at least one video element in a video, the terminal being configured to display the associated information at a specified moment.

In the first possible implementation according to the embodiment,

the information providing module 1320 is configured to provide the terminal with downloads to associated information of at least one video element in a video at a scheduled moment.

The scheduled moment includes: a moment prior to playing a video by the terminal, a moment during playing a video by the terminal or an idle moment of the terminal.

In the second possible implementation according to the embodiment,
the information providing module 1320 is configured to feed, after receiving an information acquisition request sent by the terminal, back associated information of a video element relating to a playback position in a video to the terminal; wherein,
the information acquisition request is a request sent by the terminal after receiving users' information acquisition instruction during playing a video, and the playback position is a corresponding playback position when users' information acquisition instruction is received by the terminal during playing the video.

In the third possible implementation according to the embodiment, the information generation module 1310 comprises:
an element identification unit 1311, configured to identify at least one video element in a video; and
an information acquisition unit 1312, configured to acquire associated information of each video element.

Referring to Fig. 13B, in the fourth possible implementation according to the embodiment, the element identification unit 1311 comprises:
a video data acquisition subunit 1311a, configured to decode a video and acquire at least one frame of video data comprising image frame data or both image frame data and audio frame data;
a first identification subunit 1311b, configured to, concerning image frame data, identify image elements in the image frame data by means of image recognition technology; and
a second identification subunit 1311c, configured to, concerning audio frame data, identify sound elements in the audio frame data by means of speech recognition technology.

Referring to Fig. 13C, in the fifth possible implementation according to the embodiment, the element identification unit 1311 comprises:
a play message acquisition subunit 1311e, configured to, after receiving an information acquisition request sent by a terminal, acquire a play message corresponding to a playback position carried in the information acquisition request; and
an element acquisition subunit 1311f, configured to, according to a play message, acquire a video element corresponding to a playback position in a video, the play message comprising at least one of the following messages: image frame data relating to a playback position, audio frame data relating to a playback position, and play time point corresponding to play timeline of a playback position.

Wherein, the information acquisition request is a request sent by the terminal after receiving users' information acquisition instruction during playing a video, and the playback position is a corresponding playback position when users' information acquisition instruction is received by the terminal during playing the video.

In the sixth possible implementation according to the embodiment, the element identification unit 1311 is configured to receive at least one video element reported by other terminals to a video, and the video element is one labeled by users of other terminals.

Referring to Fig. 13D, in the seventh possible implementation according to the embodiment, the information acquisition unit 1312 comprises:
an information acquisition subunit 1312a, configured to, concerning each video element, acquire at least one information of the video element by means of information search technology; and
an information sorting subunit 1312b, configured to sort at least one information according to a preset condition, and to extract top n associated information as associated information of the video element, wherein n being a positive integer.

The preset condition comprises: at least one of correlation with a video element, correlation with user location, correlation with users' history usage record, and ranking of manufacturers or suppliers of video elements.

In the eighth possible implementation according to the embodiment,

the information acquisition unit 1312 is configured to receive associated information reported by other terminals to a video element, and other terminals are terminals used by other users, or, other terminals are terminals used by manufacturers or suppliers of the video element.

In conclusion, the information acquisition device according to the embodiment comprises generating associated information of at least one video element and providing a terminal with associated information of at least one video element so as to display associated information at a specified moment after the associated information is acquired by the terminal, solving the problem of less efficient information acquisition, making it possible to display associated information of a video element by a terminal at a specified moment, and improving the information acquisition efficiency.

With regard to the device in the above embodiment, detailed description of specific modes for conducting operation of modules has been made in the embodiment related to the method, no detailed illustration will be made herein.

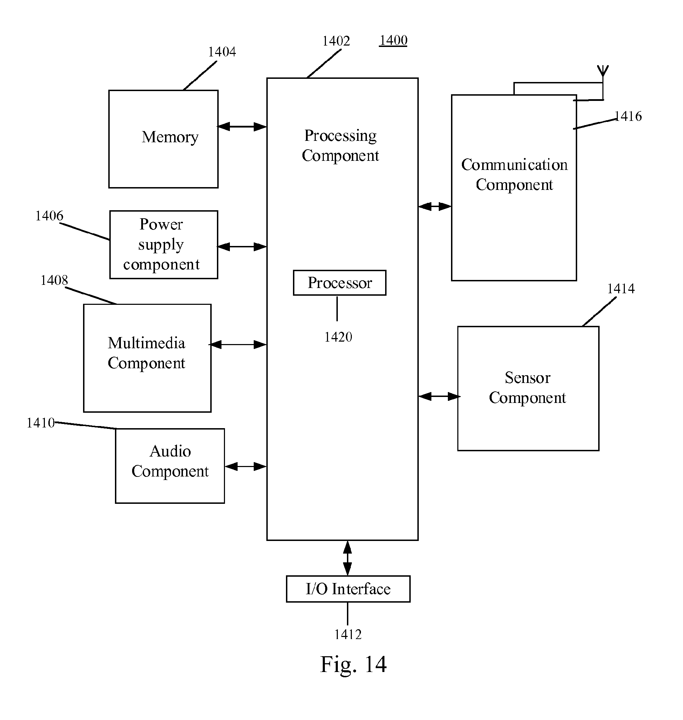

Fig. 14 is a block diagram of an information acquisition device 1400 according to an exemplary embodiment. For example, the device 1400 may be a mobile telephone, a computer, a digital broadcasting terminal, a message transceiver device, a games console, a tablet device, a medical device, a fitness facility, a PDA (personal digital assistant) and the like.

Referring to Fig. 14, the device 1400 may include one or a plurality of components as below: a processor component 1402, a memory 1404, a power supply component 1406, a multimedia component 1408, an audio component 1410, an input/output (I/O) interface 1412, a sensor component 1414 and a communication component 1416.

The processor component 1402 usually controls the overall operation of the device 1400, for example, display, telephone call, data communication, and operation associated with camera operation and record operation. The processor component 1402 may include one or a plurality of processors 1420 for executing instructions so as to complete steps of above method in part or in whole. In addition, the processor component 1402 may include one or a plurality of modules for the convenience of interaction between the processor component 1402 and other components. For example, the processor component 1402 may include a multimedia module for the convenience of interaction between the multimedia component 1408 and the processor component 1402.

The memory 1404 is configured to store data of different types so as to support the operation of the device 1400. Examples of the data include any application program or approach directive for operation of the device 1400, including contact data, phonebook data, message, picture and video, etc. The memory 1404 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1406 provides power for components of the device 1400. The power supply component 1406 may include a power management system, one or a plurality of power supplies, and other components associated with generation, management and power distribution of the device 1400.

The multimedia component 1408 includes a screen between the device 1400 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 1408 includes a front-facing camera and/or a rear-facing camera. When the device 1400 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 1410 is configured to output and/or input audio signal. For example, the audio component 1410 includes a microphone (MIC); when the device 1400 is under an operation mode such as call mode, record mode and speech recognition mode, the microphone is configured to receive external audio signal. The audio signal received may be further stored in the memory 1404 or sent out by the communication component 1416. In some embodiments, the audio component 1410 also includes a loudspeaker for outputting audio signal.

The I/O interface 1412 provides interface for the processor component 1402 and peripheral interface modules, the peripheral interface modules may be a keyboard, a click wheel and buttons, etc. These buttons may include but not limited to: home button, volume button, start button and locking button.

The sensor component 1414 includes one or a plurality of sensors for providing the device 1400 with state evaluation from all aspects. For example, the sensor component 1414 may detect the on/off state of the device 1400, relative positioning of components, for example, the components are the displayer and keypads of the device 1400; the sensor component 1414 also may detect the position change of the device 1400 or a component thereof, the presence or absence of users' touch on the device 1400, the direction or acceleration/deceleration of the device 1400, and temperature variation of the device 1400. The sensor component 1414 may also include a proximity detector, which is configured to detect the presence of nearby objects in case of no physical touch. The sensor component 1414 may also include an optical sensor, for example, CMOS or CCD image sensor for imaging. In some embodiments, the sensor component 1414 may also include an acceleration sensor, a gyro sensor, a magnetic sensor, a pressure sensor, or a temperature sensor.

The communication component 1416 is configured to facilitate wired communication or wireless communication between the device 1400 and other equipment. The device 1400 is available for access to wireless network based on communication standards, for example, WiFi, 2G or 3G, or combination thereof. In an exemplary embodiment, the communication component 1416 receives by means of a broadcast channel the broadcast signal or broadcast-related information from external broadcast management systems. In an exemplary embodiment, the communication component 1416 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1400 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 1404 including instructions, above instructions may be executed by the processors 1420 of the device 1400 so as to achieve the above methods. For example, the non-transitory computer-readable storage medium may be ROM, random access memory (RAM), CD-ROM, magnetic tape, floppy disk and optical data storage device, etc.

A non-transitory computer-readable storage medium may, when instructions in the storage medium are executed by the processor of the device 1400, cause the device 1400 to execute an information acquisition method, and the method comprises:

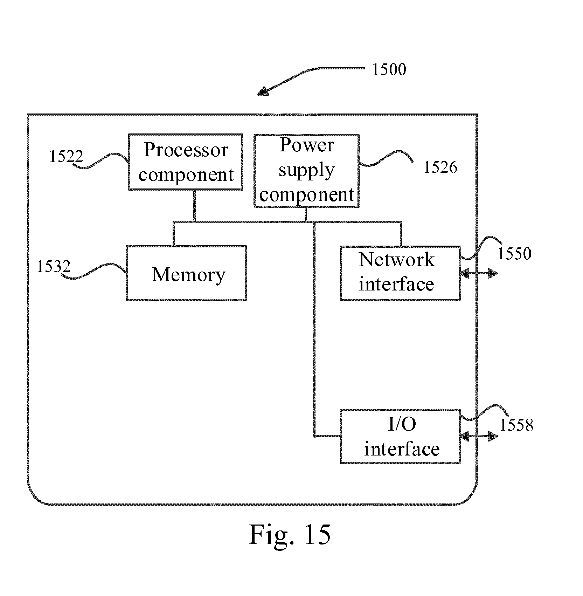

Fig. 15 is a block diagram of an information acquisition device 1500 according to an exemplary embodiment. For example, the device 1500 may be implemented as a server. Referring to Fig. 15, the device 1500 includes a processor component 1522, and further includes one or a plurality of processors, and memory resource represented by the memory 1532 and configured to store instructions that can be executed by the processor component 1522, for example, application program. The application program stored in the memory 1532 may include one or a plurality of modules each of which is corresponding to a set of instructions. In addition, the processor component 1522 is configured to execute instructions so as to execute the foregoing information acquisition method.

The device 1500 may also include a power supply module 1526 configured to execute the power management of the device 1500, a wired or wireless network interface 1550 configured to connect the device 1500 to the network, and an input/output (I/O) interface 1558. The device 1500 can operate an operating system based on and stored in the memory 1532, for example, Windows ServerTM, Mac OS XTM, UnixTM, LinuxTM, FreeBSDTM or other similar operating systems.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. An information acquisition method at a client, comprising:
acquiring associated information of at least one video element in a video, each video element being an image element, a sound element or a play clip in the video; and
displaying the associated information at a specified moment.

2. The method according to claim 1, wherein the acquiring associated information of at least one video element in a video comprises:
downloading associated information of at least one video element in the video from a server and saving the associated information at a scheduled moment;
the scheduled moment comprising: a moment prior to playing the video, a moment during playing the video or an idle moment.

3. The method according to claim 1 or claim 2, wherein the specified moment comprises:
a moment playing a tail leader of the video; or
a moment receiving a pause signal during playing the video.

4. The method according to any of claims 1 to 3, wherein the acquiring associated information of at least one video element in a video comprises:
searching, from associated information of at least one video element in the video downloaded in advance, for associated information of a video element relating to the playback position in case of receiving users' information acquisition instruction when playing a certain playback position in the video.

5. The method according to any of claims 1 to 3, wherein the acquiring associated information of at least one video element in a video comprises:
sending an information acquisition request to a server in case of receiving users' information acquisition instruction when playing a certain playback position in the video, the information acquisition request being configured to acquire associated information of a video element relating to the playback position; and
receiving such associated information of a video element as relating to the playback position and fed back by the server.

6. The method according to claim 5, wherein the sending an information acquisition request to a server comprises:
acquiring a play message corresponding to the playback position, the play message comprising at least one of following messages: image frame data relating to the playback position, audio frame data relating to the playback position, and play time point corresponding to play timeline of the playback position; and
sending the information acquisition request to the server, the information acquisition request carrying a video identification of the video and the play message corresponding to the playback position.

7. The method according to any of claims 4-6, wherein the specified moment comprises:
a moment after acquiring associated information of a video element relating to the playback position.

8. The method according to any of claims 1-6, wherein the displaying the associated information at a specified moment comprises:
if the terminal is a player device and a remote control unit corresponding to the player device has no information display ability, displaying directly the associated information by means of a prescriptive model;
if the terminal is a player device and a remote control unit corresponding to the player device has information display ability, displaying directly the associated information by means of a prescriptive model, or sending the associated information to the remote control unit configured to display the associated information by means of a prescriptive model;
if the terminal is a medium source device connectable to a player device and a remote control unit corresponding to the medium source device has no information display ability, sending the associated information to the player device, the player device being configured to display the associated information by means of a prescriptive model; and
if the terminal is a medium source device connectable to a player device and a remote control unit corresponding to the medium source device has information display ability, sending the associated information to the player device or the remote control unit, the player device or the remote control unit being configured to display the associated information by means of a prescriptive model;
wherein, the prescriptive model comprising: at least one of a split screen mode, a list mode, a tagging mode, a scrolling mode, a screen popup mode and a window popup mode.

9. The method according to any of claims 1-6, wherein the method further comprises:
when associated information of a video element displayed is triggered, jumping to a playback position corresponding to the video element in the video for playing, or jumping to information content corresponding to an information link comprised in the associated information for displaying.

10. An information acquisition method at a server, comprising:
generating associated information of at least one video element in a video, each video element being an image element, a sound element or a play clip in the video; and
providing a terminal with the associated information of the at least one video element in the video, the terminal being configured to display the associated information at a specified moment.

11. The method according to claim 10, wherein the providing a terminal with the associated information of the at least one video element in the video comprises:
providing the terminal with downloads to the associated information of the at least one video element in the video at a scheduled moment;
the scheduled moment comprising: a moment prior to playing the video by the terminal, a moment during playing the video by the terminal or an idle moment of the terminal.

12. The method according to claim 10, wherein the providing a terminal with the associated information of the at least one video element in the video comprises:
feeding, after receiving an information acquisition request sent from the terminal, back associated information of a video element of a playback position in the video to the terminal; wherein,
the information acquisition request being a request sent from the terminal after receiving users' information acquisition instruction during playing the video, and the playback position being a corresponding playback position when users' information acquisition instruction is received by the terminal during playing the video.

13. A client device for information acquisition , comprising:
an information acquisition module, configured to acquire associated information of at least one video element in a video, each video element being an image element, a sound element or a play clip in the video; and
an information display module, configured to display the associated information at a specified moment.

14. A server device for information acquisition, comprising:
an information generation module, configured to generate associated information of at least one video element in a video, each video element being an image element, a sound element or a play clip in the video; and
an information providing module, configured to provide a terminal with the associated information of the at least one video element in the video, the terminal being configured to display the associated information at a specified moment.

15. A computer program product, which when executing on a processor of a client, performs a method according to any of claims 1-9, or when executing on a processor of a server, performs a method according to any of claims 10-12.
